Europäisches Patentamt

European Patent Office

Office européen des brevets

(11) Numéro de publication: **0 305 308**
**A1**

## DEMANDE DE BREVET EUROPEEN

(21) Numéro de dépôt: 88440066.4

(22) Date de dépôt: 05.08.88

(51) Int. Cl.⁴: **G 01 S 13/02**

(30) Priorité: 07.08.87 FR 8711398

(43) Date de publication de la demande:
01.03.89 Bulletin 89/09

(84) Etats contractants désignés:
AT BE CH DE ES FR GB GR IT LI LU NL SE

(71) Demandeur: **Tafani, Christian**
**11 rue Lascaris**
**F-06300 Nice (FR)**

(72) Inventeur: **Tafani, Christian**
**11 rue Lascaris**
**F-06300 Nice (FR)**

(74) Mandataire: **Bossard, Jacques-René**
**Cabinet MEYER & COURTASSOL Bureau EUROPE 20**
**Place des Halles**
**F-67000 Strasbourg (FR)**

(54) Système de détection, de reconnaissance et d'identification à distance.

(57) Système d'identification à distance utilisant un répondeur du type à cristal de niobate de lithium. Il comprend un émetteur (10) pour transmettre des ondes électromagnétiques vers le répondeur (14) comportant le cristal (16) de niobate de lithium. Les ondes électromagnétiques sont transformées en ondes acoustiques de surface, codifiées grâce à un ensemble de barres métalliques connectées ou déconnectées à une barre commune pour représenter le code d'identification spécifique au répondeur, et retransmises sous forme d'ondes électromagnétiques vers le récepteur (12). En utilisant un socle de ciment contenant des impuretés de façon erratique, on peut donner au répondeur une "signature" impossible à reconstituer, qui trouve son application dans la certification et l'authentification des objets d'art.

fig.1

Description

## SYSTEME DE DETECTION, DE RECONNAISSANCE ET D'IDENTIFICATION A DISTANCE.

La présente invention concerne les systèmes de détection de reconnaissance et d'identification à distance d'une cible fixe ou mobile, comportant un répondeur du type à niobate de lithium, et trouvant application dans l'authentification des objets de valeur.

L'identification des individus a constamment fait l'objet de recherches. Pendant longtemps, les passeports, et autres documents d'identité ont été authentifiés par la qualité du papier employé, par les caractères ou la présence d'un cachet qui de cire est passé au timbre, qui demeure toutefois l'élément essentiel de l'identification.

Les documents d'identité contemporains ont enregistré une évolution des techniques employées : qualité du papier, filigrane, cachet sec, éléments devant constituer une barrière aux contrefacteurs.

Les plus récentes évolutions de la technique font appel à l'emploi de documents informatisés : badges de sécurité et d'identité. Toutefois on a émis un certain nombre de réserves quand à l'emploi abusif qui pourrait être fait de techniques informatiques modernes : en effet le support peut notamment renfermer des informations susceptibles de violer les libertés individuelles fondamentales. Par ailleurs, ces informations ne peuvent pour des raisons techniques, être lues et contrôlées par le porteur.

Dans le cas précis des badges de sécurité (cartes à puces C+8) employées notamment dans les entreprises de haute technologie et à haut degré de confidentialité, le recours aux techniques informatiques a entraîné un gain accru de sécurité : Ainsi le porteur d'un badge est amené à franchir des sas : pour ce faire il doit présenter son badge à un lecteur, et décliner son code confidentiel. Ce système présente quelques avantages :

Le porteur, selon son degré d'accréditation peut avoir accès ou non à certaines zones.

On peut suivre le porteur du badge dans l'entreprise, et établir des statistiques sur la fréquence de déplacement des personnels concernés.

Il subsiste toutefois quelques inconvénients :

- Dans la plupart des systèmes,(et dans une certaine gamme de prix correspondant à un certain degré de protection) le franchissement d'un sas n'entraine pas obligatoirement l'usage de la carte et du code : il suffit en effet à plusieurs individus de franchir une zone en même temps pour être dispensés du contrôle.

- Par ailleurs un système évolué (donc cher) demande à être relié à un ordinateur central, et nécessite un logiciel évolué.

- Il y a toujours contact "physique" entre le lecteur de carte, et l'individu à identifier, donc possibilité de sabotage.

- Enfin, même en cas de lecture conforme et de la délivrance du bon code, on ne peut avoir de réelle certitude quant à l'identité du porteur ; la carte permettant l'autorisation peut en effet ne pas être la propriété du porteur.

Il existe également un autre domaine dans lequel ces systèmes d'identification sont appelés à un grand développement : il s'agit des objets inanimés et tout particulièrement des oeuvres d'art qu'on doit pouvoir authentifier avec certitude.

Dans le cas des objets immobiles tels que des objets d'art, il est maintenant de pratique courante d'insérer à un endroit non visible un élément dont la forme est spécifique de l'oeuvre à protéger. Cet élément ou "insert" peut être ensuite identifié par une source de rayonnement tel que des rayons X. L'objet d'art qui peut être un tableau de peinture, une sculpture,... est d'abord "certifié" par la mise en place de l'insert et l'enregistrement de ses caractéristiques de forme spécifiques.

Dans toute transaction, on pourra ensuite procéder à une authentification formelle, de sorte que l'acquéreur éventuel ne se laisse pas abuser par une copie faite par un faussaire de talent. Outre que le système de détection par rayon X, encombrant, coûteux et dangereux ne peut pas être mis en oeuvre de façon permanente pour la protection des oeuvres d'art dans les musées ou les galeries, l'élément inséré dans l'objet n'est pas entièrement à l'abri de toute falsification. En effet, il est toujours possible à un individu disposant d'un matériel sophistiqué d'enregistrer grâce à une source de rayons X, les caractéristiques de forme spécifiques de l'insert, de reconstituer minutieusement l'insert, et de le placer ensuite dans une copie de l'oeuvre d'art de façon à pouvoir la revendre au prix de l'oeuvre authentique après qu'elle ait été faussement "authentifiée".

La présente invention concerne un système permettant d'éliminer tous ces inconvénients, utilisant un répondeur du type à niobate de lithium permettant la reconnaissance et l'identification à distance d'une personne ou d'un objet, mobile ou inanimé, grâce à une codification simple et aisée à mettre en oeuvre. Ce système fonctionne parmi un nombre quelconque d'autres "cibles" et dans n'importe quel environnement, empêchant par conséquent toute possibilité de fraude de la part du porteur. Dans le cas d'un objet à identifier, le répondeur à niobate de lithium fournit une signature spécifique à l'objet.

Le système selon l'invention consiste en un émetteur de signaux d'ondes électromagnétiques, un répondeur pour recevoir les signaux et les codifier selon un code d'identification spécifique à la cible sur laquelle se trouve le répondeur, et un récepteur pour recevoir les signaux ainsi codifiés ; le répondeur comportant un cristal du type à niobate de lithium pour transformer les ondes électromagnétiques reçues de l'émetteur en ondes électro-acoustiques et retransformer les ondes électro-acoustiques en ondes électromagnétiques à transmettre vers le récepteur, les ondes électro-acoustiques étant altérées par une modification spécifique du cristal de façon à constituer le code d'identification.

Selon l'invention, le moyen d'identification d'un sujet spécifique parmi un nombre quelconque de cibles et dans n'importe quel environnement est constitué par un tel cristal de niobate de lithium auquel auront été confiées, comme exposé plus loin, des caractéristiques spécifiques uniques, monté sur un support quelconque adapté au sujet et équipé d'une antenne. Le sujet est ainsi "étiqueté" ("labelled") de manière unique.

Si l'on considère alors tous les sujets passant dans le champ d'un lecteur de reconnaissance à distance, consistant en un transducteur à fréquence radio, un seul parmi eux renverra en écho le signal émis altéré de la manière propre à son cristal propre, et c'est ce signal écho qui, après décodage, identifiera le sujet.

Dans la pratique, le composant du système porté par le sujet est un dispositif entièrement dépourvu d'énergie, consistant en un cristal de niobate de lithium piézo-électrique, et une antenne intégrée. Le niobate de lithium est extrêmement efficace pour convertir une énergie électromagnétique en ondes acoustiques superficielles. Ce niveau d'efficacité élimine la nécessité d'interrupteurs actifs, de circuits ou de batterie. L'antenne est basée sur un système dipole, permettant un conditionnement facile pour de nombreuses variétés d'applications. Ce cristal de niobate de lithium est fabriqué artificiellement. L'antenne capte le signal transmis par le lecteur et le propage par la surface du cristal. Les propriétés piézo-électriques du cristal de niobate de lithium créent un effet d'ondes acoustiques superficielles. Cet effet est analogue à la propagation des ondes créées par la chute d'une pierre dans une mare calme. Une structure métallisée sur le cristal interrompt le déplacement de l'onde superficielle quand elle se propage à travers le cristal. Ces interruptions créent les caractéristiques d'encodage à modulation de phase qui sont uniques à chaque sujet, en formant l'équivalent d'un nombre binaire.

Le nouveau système selon l'invention répond à nombre des critiques précédentes :
- l'interrogation à distance dispense du contact physique.

Cette absence de contact dispense également de travaux importants et donc de frais : le lecteur interrogateur peut se placer derrière une cloison et donc être mobile.

- L'absence d'alimentation du système "carte" fonctionnant totalement en mode passif constitue un avantage en soi, mais également quant au suivi systématique des sujets, qui sont obligatoirement contrôlés, ce qui ne les dispense d'ailleurs pas d'avoir à fournir un code d'accès lorsqu'il s'agit de personnes.

- Le système, outre le gain important de sécurité sert donc également de système de recherche des personnes.

Parmi d'autres avantages propres à ce système et qui le distinguent des moyens d'identification actuels, on peut également indiquer :
- On détecte les gens qui n'ont pas de papiers.
- Les faux sont quasiment impossibles à faire.
- On demande une réponse uniquement sur le cas recherché, ce qui accroît l'efficacité du "balayage".

En ce qui concerne les objets d'art, la protection est encore améliorée si le répondeur à insérer dans l'objet est moulé dans un socle contenant des impuretés de type métallique disposées de façon aléatoire, de manière à ce que les ondes électromagnétiques retransmises par l'antenne vers le récepteur soient non seulement altérées par le code d'identification dû aux barres, mais également par les impuretés du socle . Ces ondes comportent alors, outre une fondamentale à fréquence prédéterminée, des harmoniques dont les amplitudes sont fonction de la disposition des impuretés dans le socle.

On va maintenant décrire le système de l'invention plus en détail, en se référant aux figures présentées en annexe, pour lesquelles :
- La figure 1 représente le système d'identification selon l'invention.
- La figure 2 est une vue schématique montrant un répondeur à cristal de niobate de lithium.
- La figure 3 montre de façon schématique le répondeur moulé dans un socle en ciment à impuretés, selon un autre aspect de l'invention.
- La figure 4 représente un schéma d'utilisation de l'invention.

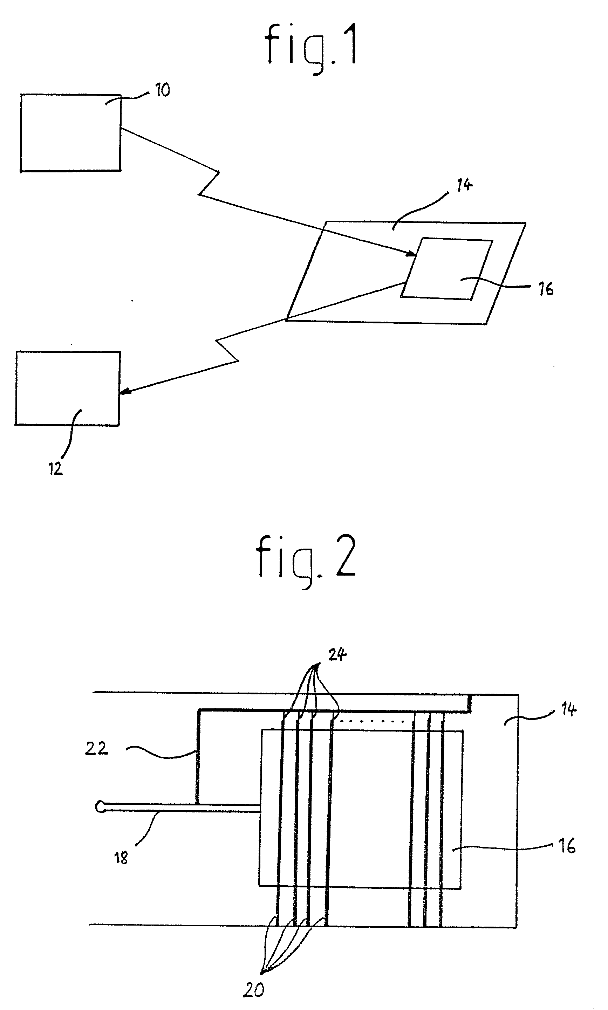

Comme on le voit sur la figure 1, dans un système informatique, un émetteur 10 transmet des ondes électromagnétiques qui sont interceptées par un répondeur du type à cristal de niobate de lithium 16 qui se trouve sur un support 14 telle qu'une carte. Les ondes électromagnétiques reçues par le cristal 16 sont transformées en ondes acoustiques, codées par le code d'identification du porteur de la carte 14, retransformées en ondes électromagnétiques qui sont transmises à un récepteur 12. Le récepteur 12 décode les ondes reçues de façon à en tirer le code d'identification de l'individu porteur de la carte. Dans cet exemple d'identification, on peut supposer que la détection du code d'identification, s'il est autorisé, déclenche l'ouverture d'une porte et permet à la personne de s'introduire dans l'enceinte de haute sécurité. Dans le cas d'une oeuvre d'art, le vol peut être perçu lors du passage de l'objet à proximité d'un système selon l'invention qui déclenche la fermeture des portes du lieu où se trouve l'objet, voire l'intervention d'un dispositif d'alarme.

Les dispositifs émetteur 10 et récepteur 12 se trouvent généralement dans un endroit déterminé, et peuvent être dissimulés dans le cas de la surveillance d'oeuvres d'art. Les ondes électromagnétiques sont en rapport avec la dimension du cristal 16. En effet, l'efficacité optimale du cristal se trouve réalisée lorsque le cristal est en résonance sous l'effet des ondes reçues. Pour des caractéristiques données du cristal, ceci ne se produit qu'à une fréquence déterminée. Inversement, la taille du cristal 16 sur son support 14, impose que la fréquence des ondes transmises par l'émetteur 1o soit bien déterminée. Généralement la taille du cristal peut varier de quelques dizièmes de millimètres à quelques millimètres, ce qui impose d'avoir des ondes électromagnétiques d'une fréquence comprise entre 500 MHz et 5000 MHz.

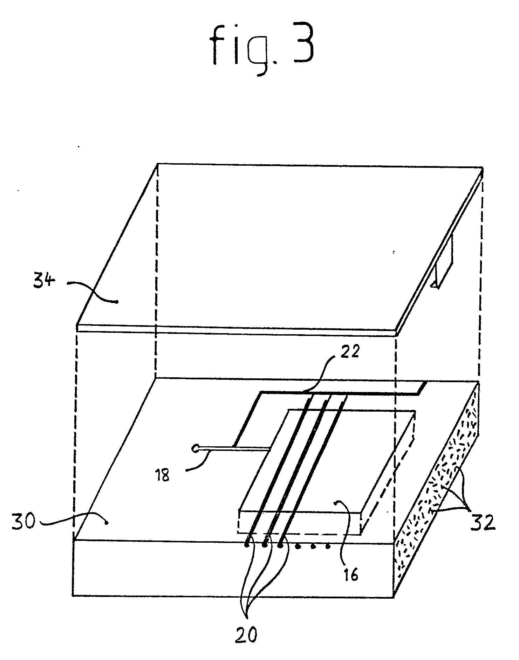

En référence à la figure 2, un répondeur selon l'invention comporte un support 14 tel qu'une carte, dans lequel se trouve inséré le cristal 16 de niobate de lithium. Une antenne dipôle 18 est chargée de recueillir les ondes électromagnétiques. Celles-ci sont converties en ondes acoustiques de surface par le cristal et se propagent dans celui-ci. Un système de barres 20 en métal ou oxyde de métal se trouve placé sur le cristal. Ces barres ont pour but d'altérer de façon différentielle les ondes acoustiques générées en surface. Lorsqu'il rencontre une barre, le signal acoustique est transformé en un signal électrique. Les différentes barres rencontrées sont toutes reliées à une barre commune 22 qui somme les signaux électriques recueillis par les différentes barres. La barre commune étant connectée à l'antenne 18, le signal électrique, somme de tous les signaux électriques recueillis dans les barres, est transformée par l'antenne 18 en ondes électromagnétiques retransmises vers le récepteur 12 (figure 1).

Les barres qui peuvent avoir une largeur de 0,02 mm de large, sont équidistantes et espacées de 0,1 mm. A chaque barre, le signal acoustique est atténué, et du fait de l'espacement des barres, subit un retard à chaque barre. La codification consiste alors à connecter ou déconnecter les barres à la barre commune. Au départ les barres 20 sont toutes connectées à la barre commune 22 par une portion destructible 24. La déconnexion de certaines des barres peut s'effectuer par sectionnement des portions destructibles mais également par fusion. Dans ce dernier cas, les portions destructibles des barres à déconnecter peuvent être soumises à un rayonnement laser. On peut également appliquer une surtension entre la barre commune et la barre à déconnecter, qui fait fondre les parties destructibles 24. Du fait qu'au départ toutes les barres sont connectées lors de la fabrication des cartes, les barres 20 et la barre commune 22 ont été représentées s'étendant jusqu'au bord de la carte 14, de sorte qu'on peut insérer les cartes dans un dispositif conçu pour appliquer la surtension par le bord des cartes, la surtension pouvant même être appliquée après qu'une couche protectrice ou un capot protecteur ait été disposé sur la carte.

Les barres qui restent connectées à la barre commune induisent donc un signal électrique (et par conséquent une onde électromagnétique) atténué et retardé qui se superpose aux autres signaux, alors que les barres déconnectées n'ont aucune effet. Toute barre connectée correspond donc à un bit un alors qu'une barre déconnectée correspond à un bit zéro. Si on a disposé n barres sur le cristal, c'est 2 puissance n combinaisons qui sont possibles pour la codification du répondeur. Par exemple si n = 10, 1024 combinaisons sont possibles.

Un processus de marquage photolithographique à résolution élevée peut également être utilisé pour déposer la structure métallique. Les codes individuels sont alors créés au moment de la fabrication.

Bien qu'une seule barre commune ait été représentée dans la réalisation de la figure 2, il est possible d'avoir un système dans lequel deux barres communes connectées à l'antenne 18 sont reliées par les barres de codification 20 à la manière d'une échelle. On peut prévoir également qu'une barre 20 sur deux soit connectée à la première barre commune alors que les autres sont reliées à la deuxième barre commune.

De même, le système de codification choisi n'est pas le seul possible. On peut envisager un répondeur dans lequel les barres ne soient pas toutes de la même largeur ou ne soient pas équidistantes. Tout autre système de codification peut être envisagé par l'homme du métier sans sortir de l'esprit de l'invention.

La figure 3 est un schéma montrant une application du répondeur selon l'invention. Sur ce schéma, le cristal 16 de niobate de lithium est moulé dans un socle en ciment 30 qui comporte des impuretés 32. Ces impuretés sont des particules de métal tel que le cuivre, l'aluminium, le fer... mais peuvent être également en oxyde de métal, ou tout autre matériau présentant des propriétés conductrices. L'antenne 18, les barres de codification 20 et la barre commune 22 sont ensuite intégrées à l'ensemble de la même façon que ces éléments sont disposés sur tout autre support comme représenté en référence à la figure 2. L'ensemble peut être protégé par un capot protecteur 34. Ce dernier doit laisser un dégagement au-dessus du cristal, d'environ 0,1 mm de façon à ne pas perturber les ondes acoustiques, et doit avoir un coefficient de perméabilité important.

La présence des impuretés 32 introduit des altérations du signal sous la forme d'harmoniques dans le signal de retour. En supposant que les ondes électromagnétiques émises par l'émetteur 10 (voir figure 1), soient des ondes sinusoïdales d'une fréquence prédéterminée, la présence de ces impuretés a pour résultat que les ondes électromagnétiques retransmises par le cristal et reçues par le récepteur 12, comportent une fondamentale à la fréquence prédéterminée et des harmoniques. L'amplitude de ces harmoniques ne peut pas être déterminée à l'avance, mais dépend de la disposition, de la densité, et de la distribution des impuretés dans le ciment.

Par conséquent, l'installation du répondeur dans un tel socle de ciment contribue à ce que les ondes électromagnétiques reçues de l'émetteur contiennent d'une part la codification introduite volontairement par la combinaison des barres conductrices, mais également une "signature" (l'ensemble des harmoniques) introduite de façon aléatoire par la mise en place du cristal dans le socle de ciment.

Une telle application présente un intérêt considérable dans le domaine de la protection et du suivi des objets de grande valeur tels que les oeuvres d'art. En effet, bien que l'utilisation de l'invention de la façon décrite en références aux figures 1 et 2 entraine une grande sécurité dans la surveillance d'objets, on peut envisager des individus trouvant le moyen de fabriquer un dispositif permettant de détecter le code introduit par les barres, de reproduire exactement le même répondeur avec la même disposition de barres, et de l'insérer dans un faux de l'oeuvre d'art. Avec le répondeur placé auparavant dans un socle à ciment à impuretés comme dans la figure 3, il est toujours possible de détecter les harmoniques introduites dans les ondes retransmises par le répondeur, mais il est impossible de reconstituer une disposition d'impuretés (totalement erratique), identique à celle qui environne le cristal du répondeur, et qui est à l'origine des harmoniques détectées.

On voit donc l'intérêt d'une telle application. Au départ, le répondeur disposant de son socle en ciment est introduit de façon non visible dans l'oeuvre d'art. Par un dispositif du type de celui de la figure 1, la "signature" formée des harmoniques introduites par les impuretés du ciment, est enregistrée en même temps que la codification due aux barres. Cet enregistrement constitue donc une certification de l'oeuvre d'art. Par la suite, cette oeuvre d'art placée dans un musée ou une galerie privée ne pourra pas faire l'objet d'un faux comme on vient de le voir. Mais en outre, en supposant qu'elle soit volée, elle pourra difficilement être revendue. En effet, l'acquéreur éventuel pourra, préalablement à son acquisition, s'assurer qu'il s'agit bien de l'oeuvre d'art que le vendeur prétend lui vendre. Pour cela, il demandera une authentification consistant à comparer la "signature" obtenue par la détection des ondes renvoyées par le répondeur inséré dans l'oeuvre d'art avec la "signature" enregistrée servant de certification. Seule l'identité parfaite entre les deux "signatures" prouvera qu'il s'agit bien de l'oeuvre d'art prétendue, puisque, comme on l'a vu précédemment, il est impossible de reconstituer cette "signature".

Bien que l'effet de "signature" trouve son application la plus intéressante dans le domaine des oeuvres d'art, il va de soi qu'elle peut être utilisée dans toute autre application où il est nécessaire d'assurer la sécurité, d'effectuer le suivi et d'empêcher la falsification d'objets de grande valeur ou présentant une grande importance. De même, la figure 3 décrit un socle en ciment, mais il va de soi que la mise en oeuvre de l'invention peut se faire par tout autre moyen, par exemple en disséminant les impuretés dans la colle destinée à fixer le répondeur sur l'objet à protéger.

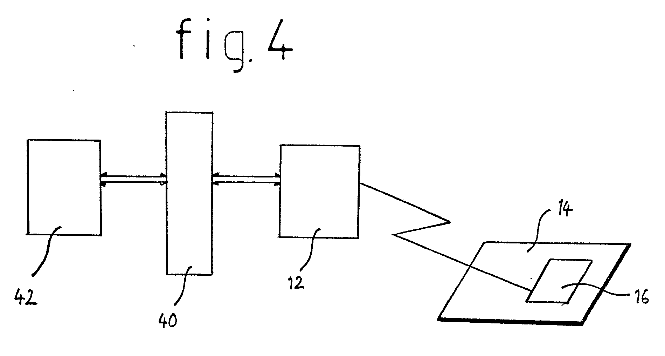

En référence à la figure 4, il est possible de relier le dispositif d'identification à un ordinateur.

Le récepteur 12 reçoit le signal analogique encodé maintenant unique depuis le récepteur 14, et le transforme en un signal de bande audio portant les données de reconnaissance. La largeur de bande audio permet au signal d'être transmis par un câble blindé du type téléphone relativement peu coûteux pouvant avoir jusqu'à plusieurs km de long. Il permet également l'emploi de dispositifs de communication du type téléphonique standart, tels que des modems pour les communications à longue distance avec une unité d'interface 40, et un calculateur hôte (CPU) 42 pour les emplacements éloignés.

L'unité d'interface 40 reçoit l'information de reconnaissance du répondeur depuis le récepteur 12 et convertit le signal analogique en données digitales. Les techniques de traitement de signaux décodent l'information digitale en nombres correspondants à la cible unique. En plus de fonctionner sous forme de convertisseur analogique en digital et en traitement de signaux, l'interface 40 sert également de multiplexeur. Le multiplexage permet la connexion à 8 lecteurs de l'interface, ce qui permet un emploi efficace de la configuration d'entrée du calculateur 42.

Bien que la réalisation préférée décrite en référence aux figures 1, 2 et 3, fait appel aux ondes acoustiques de surface, on peut envisager toute autre configuration différente dans laquelle on ferait appel aux ondes acoustiques de volume. Toutes ces modifications possibles à la portée de l'homme du métier ne sortent pas du cadre de l'invention.

## Revendications

1. Système de détection, de reconnaissance et d'identification à distance d'une cible telle qu'une personne, un objet ou un élément d'un ensemble, fixe ou mobile, quel que soit son environnement, caractérisé en ce qu'il comprend un répondeur (14) faisant appel à la technologie des ondes acoustiques superficielles créées sur un cristal de niobate de lithium ou équivalent par une onde électromagnétique d'une fréquence prédéterminée transmise par un émetteur (10), altérée au contact du cristal (16) du répondeur et renvoyée en écho vers un récepteur (12), ledit système étant caractérisé au surplus en ce que le moyen d'identification de la cible consiste lui-même dans la modification spécifique introduite au contact du cristal par l'intermédiaire d'une structure métallisée placée sur la surface dudit cristal.

2. Système d'identification selon la revendication 1, caractérisé en ce qu'il constitue un dispositif entièrement dépourvu d'énergie, formé d'un cristal de niobate de lithium(16)portant une structure métallisée présentant des interruptions créant un code individuel, spécifique à la cible portant ce système, et d'une antenne intégrée (18) du type dipôle réceptrice-émettrice.

3. Système d'identification selon les revendications 1 et 2, caractérisé en ce que la structure métallisée est constituée d'un réseau de barres (20) en métal ou en oxyde de métal, certaines seulement étant reliées à une barre commune (22) du même matériau, les obstacles constitués par les barres ayant pour but d'altérer de façon différentielle les ondes électroacoustiques propagées à partir de ladite antenne.

4. Système d'identification selon les revendications 1 et 2, caractérisé en ce que la structure métallisée est obtenue au moyen d'un procédé de marquage photolithographique à résolution élevée par dépôt d'une couche métallisée altérant le signal électroacoustique.

5. Système d'identification selon les revendications 1 à 3, caractérisé en ce que le réseau de barres métalliques (20) est conçu au départ pour que toutes les barres soient reliées à la barre commune (22) par une portion destructible (24), le codage étant ensuite réalisé par l'intervention d'un moyen de coupure de cette portion sur certaines barres, la combinaison des autres barres connectées constituant ledit code d'identification.

6. Système d'identification selon la revendication 5, caractérisé en ce que les portions destructibles (24) des barres (20) sont fusibles, le moyen de coupure étant une surtension qui, lorsqu'elle est appliquée entre la barre commune (22) et la barre à déconnecter, fait fondre la portion fusible correspondante.

7. Système d'identification selon la revendication 5, caractérisé en ce que le moyen de coupure est un rayonnement laser qui fait fondre les portions destructibles (24) des barres (20).

8. Système d'identification selon les revendications 1 à 7, caractérisé en ce que la fréquence prédéterminée des signaux d'onde électromagnétique envoyés par l'émetteur est comprise entre 500 MHZ et 5000 MHZ.

9. Système selon les revendications 1 à 5, caractérisé en ce que le cristal est moulé dans un socle (30) comportant des impuretés (32) conductrices de type métallique, disposées de façon erratique et conduisant à une altération supplémentaire du signal sous la forme d'harmoniques dans le signal de retour, qui viennent s'ajouter à la fondamentale à la fréquence prédéterminée, lesdites harmoniques ayant des amplitudes qui sont fonction de la disposition des impuretés dans le socle (30).

10. Système d'identification selon la revendication 9, utilisé comme moyen de certification et d'authentification d'objet, dans lequel le répondeur (14) est inséré dans un objet de façon à pouvoir le certifier de façon unique grâce à la "signature" constituée par la combinaison des altérations dues aux barres (20) et des altérations dues aux impuretés (32) du socle, de sorte que ledit objet puisse être authentifié de façon unique dans toute transaction.

# fig.1

# fig.2

fig. 3

# fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 165 411 (X-CYTE)<br>* Page 1, lignes 110-119; page 2, ligne 126 - page 3, ligne 69; figures 6,7 *<br>--- | 1-3,8 | G 01 S 13/02 |
| X | US-A-4 263 595 (K. VOGEL)<br>* Colonne 2, ligne 22 - colonne 5, ligne 35; figures 1-3 *<br>--- | 1-8 | |
| X | FR-A-2 033 401 (UNISEARCH)<br>* Page 5, ligne 14 - page 6, ligne 29; page 10, ligne 31 - page 11, ligne 5; figures 4,10,11 *<br>--- | 1-3,5,8 | |
| A | EP-A-0 061 373 (EMD)<br>* Page 19, ligne 31 - page 20, ligne 6; figure 9 *<br>--- | 6 | |
| A | US-A-4 210 883 (M.L. SHAH et al.)<br>* Abrégé; figures 3,10 *<br>--- | 9 | |
| A | US-A-4 204 178 (R.F. MITCHELL)<br>* Abrégé; figure 3 *<br>--- | 9 | DOMAINES TECHNIQUES RECHERCHES (Int. Cl.4) |
| A | US-A-4 327 340 (L.A. COLDREN)<br>* Colonne 11, lignes 5-13; figure 12 *<br>----- | 9 | G 01 S<br>G 06 K<br>G 07 C<br>G 08 B<br>G 10 K<br>H 03 H |

Le présent rapport a été établi pour toutes les revendications

| Lieu de la recherche | Date d'achèvement de la recherche | Examinateur |
|---|---|---|
| LA HAYE | 08-11-1988 | VAN WEEL E.J.G. |